# EUROPEAN PATENT APPLICATION

(11) **EP 3 975 496 A1**
(43) Date of publication of application: **30.03.2022**
(21) Application number: 20306122.1
(22) Date of filing: 29.09.2020
(51) Int. Cl.: H04L 29/06, H04W 12/08, H04W 12/47, G07C 9/00, H04B 5/00

(54) **INDUCTIVE ELECTRIC UNLOCK**

(71) Applicant: Hewlett-Packard Development Company, L.P., Spring TX 77389 (US)
(72) Inventor: SECCI, Sandro, 38053 Grenoble Isere (FR); DANEY DE MARCILLAC, Patrick Jacques Andre Marie, 38053 Grenoble Isere (FR); COOPER, James C, Bloomington, Indiana 47403 (US)
(74) Representative: Haseltine Lake Kempner LLP

(57) **Abstract**

In an example implementation according to aspects of the present disclosure, a system, method, and storage medium implementing an inductive electric unlock. The system includes a radio frequency identifier transponder, an electric lock, and an embedded controller where the embedded controller receives an electric current from an induction field and receives a signal from radio frequency induction communication device. The embedded controller transmits a failure identifier and a unique security certificate and receives authorization key and an unlock instruction. The embedded controller validates the authorization key and actuates the electric lock utilizing the electric current from the induction field.

## Description

### BACKGROUND

Computing devices including laptop computers may incorporate end-user replaceable components. End-user replaceable components may commonly include but are not limited to memory modules, storage devices, and wireless communication modules.

### BRIEF DESCRIPTION OF THE DRAWINGS

FIG. 1 illustrates an inductive electric unlock system, according to an example;
FIG. 2 is a block diagram showing a system for initiating an inductive electric unlock, according to an example;
FIG. 3 is a block diagram showing a system for receiving an inductive electric unlock, according to an example; and
FIG. 4 is a computing device for supporting instructions for inductive electric unlock, according to an example.

### DETAILED DESCRIPTION

Computing devices such as laptops often have end-user replaceable components internally. Such components may often be socketed onto a printed circuit board (e.g. mainboard) of the computing device. In the event of failure, complete, or component, historically the computing device may be physically opened for repair. In computing devices where security is of concern, physical access to an end-user replaceable component may be restricted. Locking mechanisms may be utilized to prevent access to the internals of computing device. Historically, locking mechanisms may include specialized keyed fasteners (e.g. screwdrivers) utilized by authorized service technicians.

Additionally, as enterprise fleet managers may have stringent policy retention for end-user replaceable parts containing sensitive data, authorized service technicians may be required to extract some parts and retain them locally until properly sanitized. At the same time, the device may be immediately shipped for a repair without that part even when device is non-functional. In another implementation, the extracted part may be sent for repair and a new part may be inserted. Described herein is an inductive electric lock system which supports end-user replaceable components to facilitate secure data retention and may be utilized when the host computing device is no longer operable.

In one implementation, a processor, memory and instructions create an induction field to power a remote radio frequency identification (RFID) transponder. The processor receives a signal from the RFID wherein the signal includes a unique security certificate and a failure identifier. The processor transmits the unique security certificate and the failure identifier to a server. The processor receives a second signal comprising and authorization key associated with the unique security certificate from the server. The processor transmits an unlock instruction and the authorization key to an electronic lock through a near field communication (NFC) device. In another embodiment, other radio frequency inductive communication method such as RFID in the microwave band may be utilized as a reader or writer to increase the range of communication.

In another implementation, an embedded controller (EC) receives an electric current from an induction field where the electric current provides power to the EC. The EC receives a signal from a near field communication (NFC) device via a radio frequency identifier (RFID) transponder. The EC transmits a failure identifier and a unique security certificate to the NFC device via the RFID transponder. The EC receives a second signal including an authorization key and an unlock instruction. The EC may validate the authorization key and unlock an electric lock utilizing the electric current from the induction field.

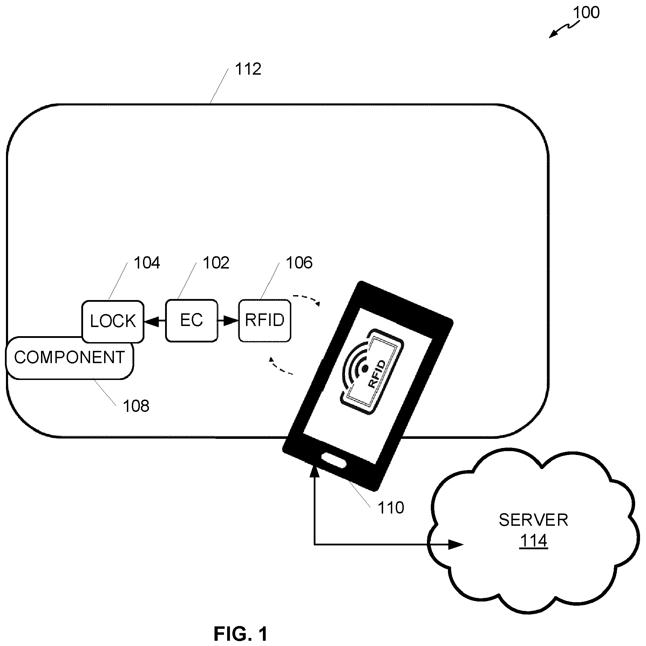

FIG. 1 illustrates an inductive electric unlock system 100, according to an example. The system 100 may include an embedded controller (EC) 102, a radio frequency identifier (RFID) transponder 106, and an electric lock 104.

**The** EC 102 may be communicatively coupled to the RFID transponder 102 and the electric lock 104. In one implementation the RFID transponder 102 and the electronic lock 104 may be connected to the EC 102 utilizing a serial peripheral bus (SPI). The interconnection utilized for signaling should be consistent with those developed for like communication and power delivery the respective components. The EC 102 may incorporate memory logic (not shown) to store and execute instructions for facilitating an inductive electric lock. The memory logic may be implemented in a flash read only memory (ROM) wherein the flash ROM may be separate from the host computing device. Additionally, the memory logic of the EC 102 may incorporate a random-access memory (RAM) that is separate from the host computing device's RAM. With the supporting ROM and RAM the EC 102 may functionally execute operations for an inductive electric unlocking of a replaceable component. In one implementation the EC 102 may incorporate a small battery backup. In the event of computing device 112 failure, the EC 102 may rely on a dedicate low powered backup battery for unlock operations. In another implementation, the EC 102 may incorporate one or more capacitors (not shown) for energy harvesting from inductive electromagnetic power received at the RFID transponder 106. The RFID transponder 106 may be electrically connected to the one or more capacitors to obtain enough charge to operate the EC 102 for short durations of time. In another implementation, the one or more capacitors may be powered by system power, prior to power failure. This functionality may allow the EC 102 to operate when electrically decoupled from the constant power source of the computing device 112 in the event that the computing device has failed. The RFID transponder 106 may be implemented to follow standard conventions of other RFID devices (e.g. responsive frequencies) however, the RFID transponder may have additional interfaces corresponding to the EC 102. The additional interface allows the EC 102 to program and reprogram the RFID transponder 106 periodically so that when power is lost to the host device, the RFID transponder transmit the correct information in passive mode.

A replaceable component 108 may correspond to a component within a computing device 112. The replaceable component 108 may correspond to an end-user replaceable component. In some implementations the replaceable component 108 may correspond to socketed printed circuit board (PCB) components. Examples of such components may include memory modules (e.g. RAM), storage modules (e.g. M.2 solid state drives), and wireless modules (e.g. M.2 WiFi adapters). These examples may not be inclusive as the system 100 may utilize any removable part within the system as the replaceable component 108. The electric lock 104 may be utilized to secure the replaceable component 108 within the computing device 112. In some examples, the electric lock 104 may replace securing mechanism, such as screws, that hold the replaceable component 112 in its respective interface. The electric lock 104 may include a piezoelectric actuator thereby becoming a piezoelectric lock.

An initiating device 110 may activate the induction electric unlock. The initiating device 110 may correspond to a mobile device, such as a smart phone or personal digital assistant. In another implementation the initiating device 110 may be a more distant RFID device operating in the microwave frequency range. Generally speaking, the initiating device 110 may correspond to a radio frequency induction communication device. The initiating device 110 may include a near field communication (NFC) device. Additionally, the initiating device 110 may include computer readable instructions in software or firmware for communicating with the EC 102. In one implementation, the computer readable instructions may include an application that executes on the initiating device 110 and utilizes the NFC device inclusive to the initiating device. In other implementations, other inductive electromagnetic devices may be utilized (e.g. inductive charging coils). The application may utilize a network connection to interface with a server 114. The application may be a downloadable piece of software and installable on an end-user handset. The application may present prompts of authentication and authorization credentials to an end-user to validate the user of the application on the initiating device 110. The application may transmit the authentication and authorization credentials to a server 114 to establish an inductive electric unlock session.

The inductive unlock session utilizes the NFC device or inductive electromagnetic device within the initiating device 110 to create an induction field to power a radio frequency identification (RFID) transponder within the computing device 112. The RFID transponder returns a signal with a unique security certificate and a failure identifier. The unique security certificate identifies the computing device 112 and may be installed within the RFID transponder at the time of manufacture. The failure identifier may be an error code from the last reported system state of the computing device 112. The initiating device 110 receives the unique security certificate and the failure identifier and transmits them to the server 114. In another embodiment, the RFID transponder 106 also may transmit credentials corresponding to the end-user of the computing device 112 to the initiating device 110 as a part of the unique security certificate.

The server 114 may correspond to a fleet management system. The server 114 may contain a number of relational databases corresponding to many computing devices deployed within a fleet organization or a group. The server 114 may have relational database entries wherein the unique security certificate may be associated with the end-user to which the authentication and authorization credentials belong. In another implementation, the server 114 may associate the unique security certificate with a specific authorized service technician. The server 114 may validate the unique security certificate, and thereby the computing device 110, to the credentials of the end-user attempting to activate the inductive electric lock. The server 114 validates through this process that an authorized end-user, whether it be the end-user themselves, or an authorized service technician, is authorized to unlock the replaceable component 108. Additionally, the server 114 may validate credentials stored within the unique security certificate as another layer of security.

Upon verification by the server 114, the server may store the received failure identifier in a database entry corresponding to the computing device 112 associated with the unique security certificate. The server 114 may transmit an authorization code to the initiating device 110. The authorization code may include cryptographic information corresponding to the unique security certificate, thereby linking the authorization code to the unique security certificate.

The initiating device 110 upon receiving the authorization code may package the authorization code as well as an unlock command to be sent to the computing device 112. The initiating device 110 may transmit a signal including the package of the authorization code and the unlock command to the RFID transponder 106. The signal may indicate to the RFID transponder 106 to write the authorization code and the unlock command to the RFID transponder. The EC 102 may interface with the RFID 106 and extract the authorization code and the unlock command. Utilizing any current generated by the inductive electromagnetic effect of the RFID transponder 106, or any current stored within any capacitors, the EC 102 may validate the authorization code against the unique security certificate and execute the unlock command at the electric lock 104.

Upon the actuation of the electric lock 104, the replaceable component 108 may be removed for safe storage or use in another computing device 112.

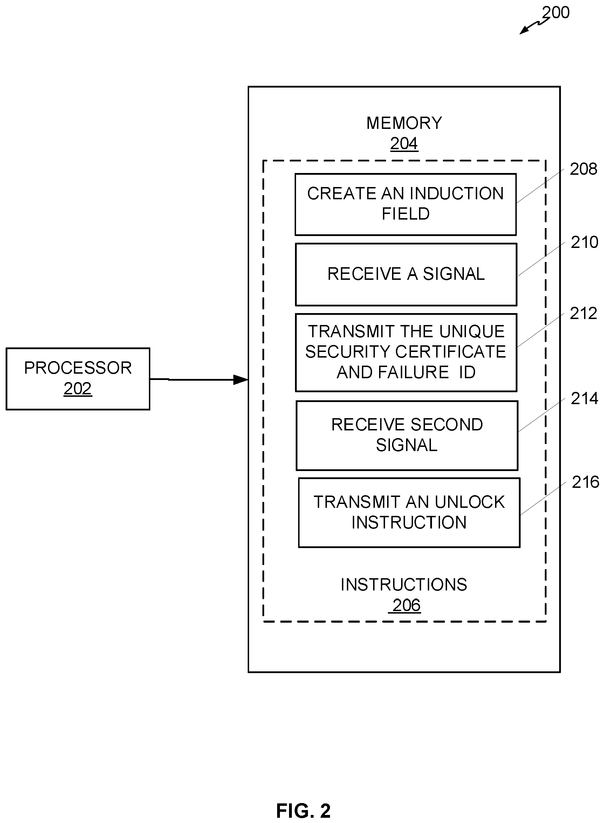

FIG. 2 is a block diagram showing a system 200 for initiating an inductive electric unlock, according to an example. The system 200 of FIG. 2 may correspond to one implementation of the initiating device 110 of FIG. 1.

The processor 202 of the system 200 may be implemented as dedicated hardware circuitry or a virtualized logical processor. The dedicated hardware circuitry may be implemented as a central processing unit (CPU). A dedicated hardware CPU may be implemented as a single to many-core general purpose processor. A dedicated hardware CPU may also be implemented as a multi-chip solution, where more than one CPU are linked through a bus and schedule processing tasks across the more than one CPU.

A virtualized logical processor may be implemented across a distributed computing environment. A virtualized logical processor may not have a dedicated piece of hardware supporting it. Instead, the virtualized logical processor may have a pool of resources supporting the task for which it was provisioned. In this implementation, the virtualized logical processor may actually be executed on hardware circuitry; however, the hardware circuitry is not dedicated. The hardware circuitry may be in a shared environment where utilization is time sliced. In some implementations the virtualized logical processor includes a software layer between any executing application and the hardware circuitry to handle any abstraction which also monitors and save the application state. Virtual machines (VMs) may be implementations of virtualized logical processors. In this implementation, the initiating device 112 may be utilizing a virtual machine internally to execute instructions related to the operation of the inductive electric lock.

A memory 204 may be implemented in the system 200. The memory 204 may be dedicated hardware circuitry to host instructions for the processor 202 to execute. In another implementation, the memory 204 may be virtualized logical memory. Analogous to the processor 202, dedicated hardware circuitry may be implemented with dynamic ram (DRAM) or other hardware implementations for storing processor instructions. Additionally, the virtualized logical memory may be implemented in a software abstraction which allows the instructions 206 to be executed on a virtualized logical processor, independent of any dedicated hardware implementation.

The system 200 may also include instructions 206. The instructions 206 may be implemented in a platform specific language that the processor 202 may decode and execute. The instructions 206 may be stored in the memory 204 during execution. The instructions 206 may be encoded to perform operations such as create an induction field to power a remote radio frequency identification transponder 208, receive a signal from the radio frequency identification (RFID) transponder, wherein the signal comprises a unique security certificate and a failure identifier 210, transmit the unique security certificate and the failure identifier to a server for authentication 212, receive a second signal comprising an authorization key associated with the unique security certificate 214, and transmit an unlock instruction and the authorization key to an electric lock through a radio frequency induction communication device 216.

The processor 202 creates an induction field 208 to power a RFID transponder. The induction field utilizes an inductive electromagnetic effect wherein an electric current may be generated at the RFID transponder. The induction field may be created with an NFC reader in both an active and passive RFID mode. The induction field may be created by other technologies to power the EC 102, such as wireless charging.

The processor 202 receives a signal 210 from the radio frequency identification (RFID) transponder, wherein the signal comprises a unique security certificate and a failure identifier. In one implementation, the NFC reader receives a signal from the RFID transponder responsive to the inductive field. The RFID transponder operates in a passive mode and transmits the unique security certificate and the failure identifier.

The processor 202 transmits the unique security certificate and the failure identifier 212 to a server for authentication. The processor 202 of the initiating device 110 may encapsulate and transmit the unique security certificate and the failure identifier to the server 114 for validation. The processor 202 may utilize a local area network connection or wide area network connection. In most implementations, the processor 202 may utilize the internet to connect with a cloud service operating as the server 114. As described in reference to FIG.1, the server 114 may utilize a database to verify the user of the initiating device 110 and the unique security certificate of the computing device 112.

The processor 202 receives a second signal 214 comprising an authorization key associated with the unique security certificate. The processor 202 of the initiating device 110 may receive via the same or a similar communication channel an authorization key. In many implementations, the second signal may be a synchronous response to the transmitted unique security certificate and failure identifier. Both the transmit of the unique security certificate and the response of the authorization key may be in one communication session.

The processor 202 transmits an unlock instruction 216 and the authorization key to an electric lock through a radio frequency induction communication device. The processor 202 may activate the NFC device within the initiating device 110, thereby creating the inductive field again. The processor 202 may instruct the NFC device to transmit in a write mode, the authorization key and the unlock instruction.

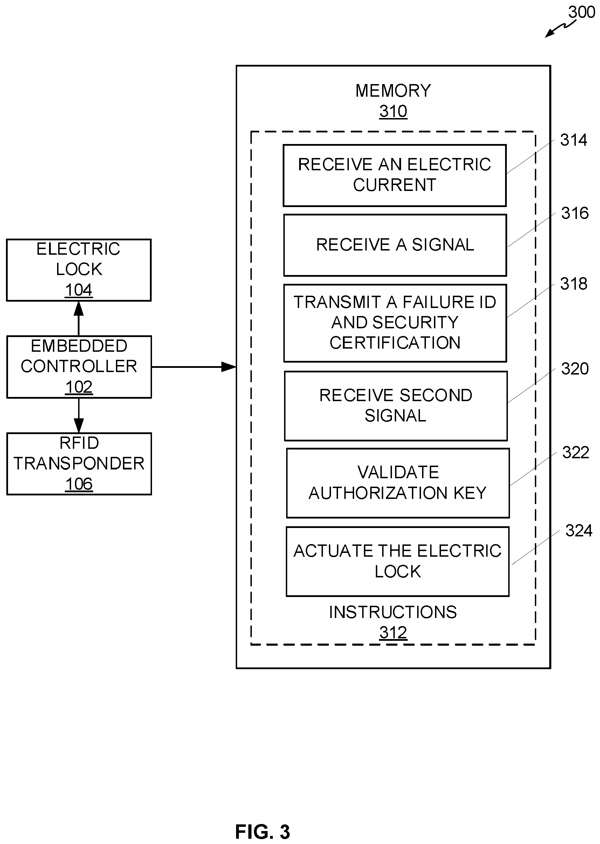

FIG. 3 is a block diagram showing a system for receiving an inductive electric unlock, according to an example. The system 300 of FIG. 2 may correspond to one implementation of the locking system inclusive to the computing device 112 of FIG. 1. The EC 102, the RFID transponder 106 and the electric lock 104 are recreated in FIG. 3 for clarity.

**As** described in reference to FIG. 1, the EC 102 may be a low powered embedded controller within a computing device 112. The EC 102 may provide the processing support for the inductive electric lock of the illustrated computing device 112. The EC 102 may be electrically coupled to the computing device 112 during normal operation. During normal operations the EC 102 may write credential associated with the end-user of the device as received from an application programming interface between the computing device 112 and the EC 102. The EC 102 may write the credentials to the small memory integrated in the RFID transponder 106. During a computing device 112 failure event, the EC 102 may receive failure identifiers from the computing device 112. As described in reference to FIG. 1, the EC 102 may be communicatively coupled to the RFID transponder 106. The EC 102 may be able to write the failure identifiers to a small memory integrated into the RFID transponder 106. The integrated memory provides the storage and logic for the RFID transponder 106 to operate in a similar manner to many commercially available RFID tags, particularly in passive mode. Likewise, the EC 102 may read any data written to designated areas within the RFID transponder's 106 memory when a write action is transmitted.

A memory 310 may be implemented in the system 300. The memory 310 may be dedicated hardware circuitry to host instructions for the EC 102 to execute. In at least one implementation the memory 310 may be physically integrated into the EC 102 itself.

The system 300 may also include instructions 312. The instructions 312 may be implemented in a platform specific language that the EC 310 may decode and execute. The instructions 312 may be stored in the memory 310 during execution. The instructions 312 may be encoded to perform operations such as receive an electric current from an induction field, receive a signal from a near field device via the RFID transponder, transmit a failure identifier and a unique security certificate via the RFID transponder, receive second signal comprising an authorization key associated with the unique security certificate and an unlock instruction, validate the authorization key, and actuate the electric lock utilizing the electric current from the induction field.

EC 102 receives an electric current 314 from an induction field, wherein the electric current provides power to the embedded controller. As described in reference to FIG. 1, the RFID transponder 106 may be electrically coupled to the EC 106. As electric current is generated at the RFID transponder 106, electric current may be transferred to the EC 106. In another implementation, the electric current may be transferred to a capacitor system to accumulate current for the operation of the EC 106. The induction field may be generated by an NFC device within the initiating device 110.

The EC 102 receives a signal 316 from a near field device via the RFID transponder. The signal may correspond to a passive read request from the initiating device 110. In another implementation, the passive read request may be processed directly at the RFID transponder.

The EC 102 transmits a failure identifier and a unique security certificate 318 via the RFID transponder. During normal operation of the computing device 112, the EC 102 may write the failure identifier and the unique security certificate to the small memory integrated into the RFID transponder 106. Upon computing device 112 failure, the RFID transponder 106 may transmit the written failure identifier and unique security certificate in a passive RFID mode.

The EC may receive second signal 320 comprising an authorization key associated with the unique security certificate and an unlock instruction. The second signal may be received from the initiating device 110. The RFID transponder 106 may receive the second signal from the initiating device 110 as a "write" operation. In one implementation, logic within the RFID transponder 106 may write the received authorization key and unlock instruction to a specific space in the small integrated memory of the RFID transponder 106. As the EC 102 may be electrically coupled to the RFID transponder 106, the EC 102 may operate during the receipt of the second signal and read the authorization key and unlock instruction from the RFID transponder's 106 integrated memory.

The EC 102 validates the authorization key 322 utilizing cryptographic elements such as public key and private key pairs. In one implementation, a public key may be included in the unique security certificate. The private key may be internal to the EC 102. The authentication key may include a token from the server 114 to be verified by the private key of the EC 102 to verify that the authorization key is intended for this system. In another implementation, the authorization key may include an identifier corresponding to the known parts within the computing device 110. The server 114 may include a listing of a targeted component within the device, which may be matched to a listing stored within the EC 102. In an implementation of a system with multiple electronic locks, the EC 102 may switch based on the component indicated in the authorization key.

The EC 102 actuates the electric lock 324 utilizing the electric current from the induction field. In one implementation, the EC 102 may send a signal to the electric lock 104 to actuate a piezoelectric actuator. The actuation may release the replaceable component 108.

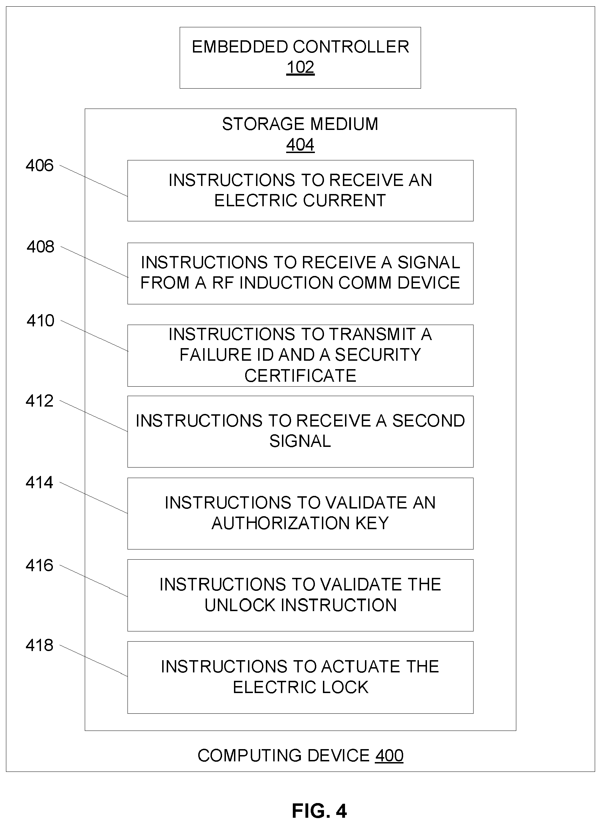

FIG. 4 is a computing device for supporting instructions for inductive electric unlock, according to an example.

The computing device 400 depicts a EC 102 and a storage medium 404 and, as an example of the computing device 400 performing its operations, the storage medium 404 may include instructions 406-418 that are executable by the EC 102. The EC 102 may be synonymous with the EC 102 referenced in FIG. 1. Additionally, the EC 102 may be synonymous with a microcontroller. The storage medium 404 can be said to store program instructions that, when executed by EC 102, implement the components of the computing device 400.

The executable program instructions stored in the storage medium 404 include, as an example, instructions to receive an electric current from an induction field, wherein the electric current provides power to the embedded controller 406, instructions to receive a signal from a radio frequency induction communication device via the RFID transponder 408, instructions to transmit a failure identifier and a unique security certificate via the RFID transponder 410, instructions to receive a second signal comprising an authorization key associated with the unique security certificate and an unlock instruction 412, instructions to validate the authorization key 414, instructions to validate the unlock instruction corresponds to a component corresponding to an electric lock 416, and instructions to actuate the electric lock utilizing the electric current from the induction field 418.

Storage medium 404 represents generally any number of memory components capable of storing instructions that can be executed by EC 102. Storage medium 404 is non-transitory in the sense that it does not encompass a transitory signal but instead is made up of at least one memory component configured to store the relevant instructions. As a result, the storage medium 404 may be a non-transitory computer-readable storage medium. Storage medium 404 may be implemented in a single device or distributed across devices. Likewise, EC 102 represents embedded controllers or microcontrollers capable of executing instructions stored by storage medium 404.

In one example, the program instructions 406-418 may be part of an installation package that, when installed, can be executed by processor 102 to implement the components of the computing device 400. In this case, storage medium 404 may be a portable medium such as a CD, DVD, or flash drive, or a memory maintained by a server from which the installation package can be downloaded and installed. In another example, the program instructions may be part of an application or applications already installed. Here, storage medium 404 can include an installation package in integrated memory such as a hard drive, solid state drive, or the like.

It is appreciated that examples described may include various components and features. It is also appreciated that numerous specific details are set forth to provide a thorough understanding of the examples. However, it is appreciated that the examples may be practiced without limitations to these specific details. In other instances, well known methods and structures may not be described in detail to avoid unnecessarily obscuring the description of the examples. Also, the examples may be used in combination with each other.

Reference in the specification to "an example" or similar language means that a particular feature, structure, or characteristic described in connection with the example is included in at least one example, but not necessarily in other examples. The various instances of the phrase "in one example" or similar phrases in various places in the specification are not necessarily all referring to the same example.

It is appreciated that the previous description of the disclosed examples is provided to enable any person skilled in the art to make or use the present disclosure. Various modifications to these examples will be readily apparent to those skilled in the art, and the generic principles defined herein may be applied to other examples without departing from the scope of the disclosure. Thus, the present disclosure is not intended to be limited to the examples shown herein but is to be accorded the widest scope consistent with the principles and novel features disclosed herein.

## Claims

1. A system comprising:
a processor; and
a memory, communicatively coupled to the processor, comprising instructions that when executed cause the processor to:
create an induction field to power a remote radio frequency identification transponder;
receive a signal from the radio frequency identification (RFID) transponder, wherein the signal comprises a unique security certificate and a failure identifier;
transmit the unique security certificate and the failure identifier to a server for authentication;
receive a second signal comprising an authorization key associated with the unique security certificate; and
transmit an unlock instruction and the authorization key to an electric lock through a radio frequency induction communication device.

2. The system of claim 1 wherein the signal further comprises credentials to the server.

3. The system of claim 1 wherein the unique security certificate comprises cryptographic elements.

4. The system of claim 1 wherein the failure identifier comprises a component associated with the electric lock.

5. The system of claim 4 wherein the wherein the electric lock is a piezo electric lock.

6. A system comprising:
an electric lock;
a radio frequency identifier (RFID) transponder;
an embedded controller communicatively coupled to the electric lock and the RFID transponder; and
a memory communicatively coupled to the embedded controller, comprising instructions that when executed cause the embedded controller to:
receive an electric current from an induction field via the RFID transponder, wherein the electric current provides power to the embedded controller;
receive a signal from a radio frequency induction communication device via the RFID transponder;
transmit a failure identifier and a unique security certificate via the RFID transponder;
receive second signal comprising an authorization key associated with the unique security certificate and an unlock instruction;
validate the authorization key; and
actuate the electric lock utilizing the electric current from the induction field.

7. The system of claim 6 the instructions further comprising transmitting credentials via the RFID transponder.

8. The system of claim 6 wherein the unique security certificate comprises cryptographic elements.

9. The system of claim 6 wherein the failure identifier comprises a component associated with the electric lock.

10. The system of claim 9 wherein the electric lock is a piezo electric lock.

11. A non-transitory computer readable medium comprising instructions executable by an embedded controller to:
receive an electric current from an induction field, wherein the electric current provides power to the embedded controller;
receive a signal from a radio frequency induction communication device via the radio frequency identifier (RFID) transponder;
transmit a failure identifier and a unique security certificate via the RFID transponder;
receive a second signal comprising an authorization key associated with the unique security certificate and an unlock instruction;
validate the authorization key;
validate the unlock instruction corresponds to a component corresponding to an electric lock and
actuate the electric lock utilizing the electric current from the induction field.

12. The medium of claim 11 the instructions further comprising transmitting credentials via the RFID transponder.

13. The medium of claim 11 wherein the unique security certificate comprises cryptographic elements.

14. The medium of claim 11 wherein the electric lock is a piezo electric lock.

15. The medium of claim 11 wherein the embedded controller is electrically decoupled from a constant power source.
